(19) Europäisches Patentamt
European Patent Office
Office européen des brevets

(11) **EP 4 604 055 A1**

(12) **EUROPÄISCHE PATENTANMELDUNG**

(43) Veröffentlichungstag:
**20.08.2025   Patentblatt 2025/34**

(21) Anmeldenummer: **24157496.1**

(22) Anmeldetag: **14.02.2024**

(51) Internationale Patentklassifikation (IPC):
**G06T 7/00** (2017.01)     **G06T 7/60** (2017.01)

(52) Gemeinsame Patentklassifikation (CPC):
**G06T 7/0006; G06T 7/60;** G06T 2207/20021;
G06T 2207/30268

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Lisa Dräxlmaier GmbH
84137 Vilsbiburg (DE)**

(72) Erfinder: **Heßke, Andreas
84041 Essenbach (DE)**

(54) **VERFAHREN UND PRÜFSYSTEM ZUM ERKENNEN VON FEHLSTELLEN IN LINIENFÖRMIGEN ELEMENTEN**

(57)     Die Offenbarung betrifft ein Verfahren (100) und ein Prüfsystem zum Erkennen von Fehlstellen in linienförmigen Elementen von Fahrzeugkomponenten. Das Verfahren umfasst die folgenden Schritte: Bereitstellen (101) eines Kamerabildes einer Fahrzeugkomponente mit einem linienförmigen Element; wobei das Kamerabild Bildelemente mit einer jeweiligen Helligkeit umfasst; Bestimmen (102) eines Auswertebereichs in dem Kamerabild mit einer Mehrzahl von Reihen, wobei der Auswertebereich zumindest einen Teil des linienförmigen Elements umfasst; Bestimmen (103) von Helligkeitswerten der Bildelemente einer jeweiligen Reihe des Auswertebereichs; Ermitteln (104) einer Anzahl von Bildelementen der jeweiligen Reihe des Auswertebereichs, deren Helligkeitswerte jenseits eines Helligkeits-Schwellwertes liegen, wobei die ermittelte Anzahl einer Dicke des linienförmigen Elements in der jeweiligen Reihe des Auswertebereichs entspricht; und Erkennen (105) einer Fehlstelle in dem linienförmigen Element der Fahrzeugkomponente, falls die Dicke des linienförmigen Elements über die Mehrzahl der Reihen des Auswertebereichs eine Schwankung außerhalb eines Toleranzbereichs aufweist.

Fig. 1

EP 4 604 055 A1

## Beschreibung

### Technisches Gebiet

Die vorliegende Erfindung betrifft ein Verfahren und ein Prüfsystem zum Erkennen von Fehlstellen in linienförmigen Elementen von Fahrzeugkomponenten. Die Erfindung betrifft insbesondere einen Bildauswertealgorithmus für linienförmige Bildelemente.

### Stand der Technik

Bildauswertealgorithmen nutzen sehr oft Schwellwertverfahren, die auf Auswerteregionen beschränkt werden. Es wird in der Regel aber kein weiterer Schritt einer Zerlegung in Subregionen durchgeführt. Somit können unter Umständen lokale Bildunterschiede durch das Schwellwertverfahren abgeschnitten werden und werden daher nicht oder inkorrekt beurteilt. Ein anderes gängiges Verfahren zum Auswerten von linienförmigen Bildelementen ist, dass man einen Polygonzug entlang dieser Linie setzt. In der Regel sind diese Polygonzüge als feste Region im Bild verankert oder können dem Bildelement nachgeführt werden. Der Polygonzug kann entweder als "Ein-Pixel-Linie" ausgeführt werden oder als "Multi-Pixel-Band". Bei der "Ein-Pixel-Linie" wird immer nur der Pixel im Bild ausgewertet, der sich mit dem Polygonzug schneidet. Das hat zur Folge, dass alle anderen benachbarten Bildregionen nicht ausgewertet werden. Bei unzureichender Bauteil-Fehllagekompensation (im Bild) kann es zu starken Auswerteabweichungen kommen. Zudem ist dieses Verfahren ohne weitere Glättungsverfahren oftmals mit starkem Signalrauschen behaftet. Dieses Rauschen kann mit dem "Multi-Pixel-Band" verringert werden, da hier nicht nur ein Schnittpixel verwendet wird, sondern auch eine definierte Anzahl an Nachbarpixeln. Daher ergibt sich an jedem Einzelpunkt des Polygonzuges ein Mittelwert aus mehreren Pixeln (die meist senkrecht zum Polygonzug stehen). Die Ausgabewerte dieses Verfahrens sind auch etwas stabiler bei Lagetoleranzen - können aber immer noch sehr sensibel darauf reagieren.

### Beschreibung der Erfindung

Eine Aufgabe der Erfindung ist es daher, ein Konzept zur Auswertung von linienförmigen Bildelementen zu schaffen, das bei der Prüfung von Fahrzeugkomponenten eingesetzt werden kann. Solche linienförmigen Bildelemente kommen unter anderem in der Interieur-Ambiente-Beleuchtung von Fahrzeugkomponenten vor. Insbesondere ist es eine Aufgabe, einen entsprechenden Algorithmus zu schaffen, der das linienförmige Bildelement bzw. die Leuchtlinie lagetolerant erfassen kann und festgelegte Auswerteparameter entlang dieser gefundenen Linie ausgeben kann, wie beispielsweise Helligkeit, Farbe, Dicke und Lage der Linie. Die so ermittelten Werte können dann gegen Ziel- bzw. Grenzwerte geprüft werden.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die erfinderische Lösung basiert auf der Idee, das Bild des zu beurteilenden Prüflings mit einer Kamera, beispielsweise einer ein- oder mehrkanaligen Farb-Kamera oder einer (einkanaligen) Grauwert-Kamera, aufzunehmen, wobei ein zuvor definierter Bereich die Auswerteregion im Bild festlegt (ROI - Region of Interest). Innerhalb dieser Auswerteregion wird längs derer größten Ausdehnung von links nach rechts die Auswerteregion abgescannt, dabei in senkrechte Schnitte zerlegt, und die Auswerteparameter über ein lokales Schwellwertverfahren ermittelt.

Dieser Bildauswertealgorithmus kann bei allen linienförmigen Bildelementen angewendet werden. Diese kommen im Umfeld der Produktprüfung von Fahrzeugkomponenten sehr häufig vor. Es können damit aussagekräftig zum Beispiel Leuchtelemente oder Nähte bei Interieur-Komponenten bestimmt werden. Auch Lage- oder Formbestimmungen von Kabel oder Leiterbahnen sind möglich - ebenso Aufdrucke.

Die in dieser Offenbarung vorgestellte Lösung bietet die folgenden Vorteile:
Die Parametrierung des Algorithmus ist sehr einfach. Es wird lediglich eine definierte Auswerteregion im Bild benötigt und es muss ein prozentualer Schwellwert (0-100%) festgelegt werden, der für das Schwellwertverfahren benötigt wird. Der Algorithmus kann so lagetolerant innerhalb einer Auswerteregion auswerten. Durch das lokale Schwellwertverfahren werden auch Unterbrechungen der auszuwertenden Linie detektierbar.

Der Algorithmus liefert zu Farb- und Helligkeitsinformationen auch geometrische Informationen. Zudem ist eine vollständige Bildauswertung in wenigen Millisekunden auf aktuellen PCs durchführbar und bietet einen Vorteil bei der Taktzeitoptimierung in Serien-Prüfanlagen.

Die Erfindung schafft eine Auswertung anhand eines flexiblen, lagetoleranten Auswerteverfahrens, das Farb-, Helligkeits- und Prüflingsgeometrieinformationen in Form von Linien bestimmt, die auf Fehler überprüft werden können.

Gemäß einem ersten Aspekt wird die oben beschriebene Aufgabe gelöst durch ein Verfahren zum Erkennen von Fehlstellen in linienförmigen Elementen von Fahrzeugkomponenten, wobei das Verfahren folgende Schritte umfasst: Bereitstellen eines Kamerabildes einer Fahrzeugkomponente mit einem linienförmigen Element; wobei das Kamerabild Bildelemente mit einer jeweiligen Helligkeit umfasst; Bestimmen eines Auswertebereichs in dem Kamerabild mit einer Mehrzahl von Reihen, wobei der Auswertebereich zumindest einen Teil des linienförmigen Elements umfasst; Bestimmen von Helligkeitswerten der Bildelemente einer jeweiligen Reihe des Auswertebereichs; Ermitteln einer Anzahl von Bildelementen der jeweiligen Reihe des Auswertebereichs, deren Helligkeitswerte jenseits eines Helligkeits-Schwellwertes liegen, wobei die ermittelte Anzahl einer Dicke des linienförmigen Elements in der jeweiligen Reihe des Auswertebereichs entspricht; und Erkennen einer Fehlstelle in dem linienförmigen Element der Fahrzeugkomponente, falls die Dicke des linienförmigen Elements über die Mehrzahl der Reihen des Auswertebereichs eine Schwankung außerhalb eines Toleranzbereichs aufweist.

Ein solches Verfahren ermöglicht eine einfache und aufwandsgünstige Auswertung von linienförmigen Elementen bzw. Bildelementen, das bei der Prüfung von Fahrzeugkomponenten eingesetzt werden kann. Das Verfahren ist in der Lage, das linienförmige Bildelement bzw. die Leuchtlinie lagetolerant zu erfassen und kann effizient überprüfen, ob die Dicke des linienförmigen Elements in etwa konstant über die Längsachse ist. Bei entsprechender Schwankung der Dicke wird eine Fehlstelle erkannt. Die Fahrzeugkomponente kann in diesem Fall als fehlerhaft aussortiert werden.

Gemäß einer beispielhaften Ausführungsform des Verfahrens ist der Auswertebereich ein rechteckiger Rahmen und so bestimmt, dass der zumindest eine Teil des linienförmigen Elements entlang einer Längsrichtung des Rahmens in dem Rahmen angeordnet ist.

Mit einem solchen rechteckigen Rahmen, der in Längsrichtung über das linienförmige Element gelegt wird, können auf einfache Weise Schnitte durch das linienförmige Element bestimmt werden, anhand derer sich die jeweilige Dicke des linienförmigen Elements bestimmen lässt. Bei Änderungen der Dicke kann eine Fehlstelle im linienförmigen Element detektiert werden.

Gemäß einer beispielhaften Ausführungsform des Verfahrens verläuft die Mehrzahl von Reihen in etwa senkrecht zu dem linienförmigen Element und repräsentiert insbesondere Schnitte durch eine Längsachse des linienförmigen Elements.

Dies ermöglicht es, Schnitte quer zur Längsachse des linienförmigen Elements auszuführen und damit die Dicke des linienförmigen Elements entlang seiner Längsachse zu ermitteln und bei Schwankungen der Dicke Fehlstellen zu erkennen.

Insbesondere weist eine Reihe Bildelemente auf, welche innerhalb der jeweiligen Reihe nebeneinander angeordnet sind. Jedes Bildelement kann bevorzugt einer eindeutigen Position innerhalb der jeweiligen Reihe zugeordnet sein. Die Position kann einem eindeutigen Positionswert zugeordnet werden.

Gemäß einer beispielhaften Ausführungsform des Verfahrens stellt das Kamerabild ein Graubild dar, dessen Bildelemente als Grautöne dargestellt sind, wobei die Grautöne den jeweiligen Helligkeiten der Bildelemente des Kamerabilds entsprechen.

Die einfachste Möglichkeit ist es hier ein Graubild zu nutzen, das aus dem Kamerabild abgeleitet werden kann. Anhand der Helligkeitswerte bzw. Grautöne des Graubilds lässt sich auf einfache Weise eine Kontur des linienförmigen Elements bestimmen. Dazu kann eine Schwarz-Weiß Kamera verwendet werden oder eine Farbkamera, zum Beispiel eine 3-Kanal-Farbkamera. Im letzteren Fall lässt sich das Graubild aus dem 3 Farbkanälen bestimmen.

Gemäß einer beispielhaften Ausführungsform des Verfahrens ist das Kamerabild ein 3-Kanal-Farbbild und das Verfahren umfasst die folgenden Schritte: Zerlegen des 3-Kanal-Farbbilds in seine drei Farbkanäle; und Erzeugen eines Graubilds basierend auf einer gewichteten Superposition der drei Farbkanäle des 3-Kanal-Farbbilds; wobei das Bestimmen der Helligkeitswerte auf das Graubild angewendet wird.

Anhand des Graubilds können auf einfache Weise die Helligkeitswerte des Kamerabilds bestimmt werden. Bei einem 3-Kanal-Farbbild können auf effiziente Weise die drei Farbkanäle zu einem Graubild weiterverarbeitet werden. Vorteil des 3-Kanal-Farbbilds ist, dass hier auch Farbinformationen vorliegen, die ebenfalls zum Bestimmen von Fehlstellen in dem linienförmigen Element herangezogen werden können, wie weiter unten beschrieben.

Gemäß einer beispielhaften Ausführungsform des Verfahrens umfasst das Verfahren die folgenden Schritte: Bestimmen eines Mittelwerts der Helligkeitswerte welche jenseits des Helligkeits-Schwellwertes liegen, wobei der Mittelwert einer Grauintensität des linienförmigen Elements in der jeweiligen Reihe des Auswertebereichs entspricht; und Erkennen einer Fehlstelle in dem linienförmigen Element der Fahrzeugkomponente, falls die Grauintensität über die Mehrzahl der Reihen des Auswertebereichs eine Schwankung außerhalb eines jeweiligen Grauintensitäts-Toleranzbereichs aufweist.

Diese Verfahrensschritte erlauben, das ausgewertete Graubild als Helligkeitslinie darzustellen und damit eine mögliche Helligkeitsmanipulation bzw. einen Helligkeitsfehler zu erkennen.

Gemäß einer beispielhaften Ausführungsform des Verfahrens wird das Bestimmen des Mittelwerts der Helligkeitswerte, welche jenseits des Helligkeits-Schwellwertes liegen, zusätzlich auf die drei Farbkanäle angewendet, wobei der Mittelwert einer jeweiligen Farbintensität des linienförmigen Elements in der jeweiligen Reihe des Auswertebereichs entspricht; und wobei das Verfahren ferner folgenden Schritt aufweist: Erkennen einer Fehlstelle in dem linienförmigen Element der Fahrzeugkomponente, falls die jeweilige Farbintensität über die Mehrzahl der Reihen des Auswertebereichs eine Schwankung außerhalb eines jeweiligen Farbintensitäts-Toleranzbereichs aufweist.

Diese Verfahrensschritte erlauben, die ausgewerteten Farbkanäle des 3-Kanal Farbbilds als Farblinien darzustellen und damit eine mögliche Farbmanipulation bzw. einen Fehler in der Farbintensität zu erkennen.

Gemäß einer beispielhaften Ausführungsform des Verfahrens umfasst das Verfahren die folgenden Schritte: Bestimmen eines Schwerpunkts der Helligkeitswerte für die jeweilige Reihe des Auswertebereichs; und Erkennen einer Fehlstelle in dem linienförmigen Element der Fahrzeugkomponente, falls der Schwerpunkt über die Mehrzahl der Reihen des Auswertebereichs eine Schwankung außerhalb eines Schwerpunkt-Toleranzbereichs aufweist.

Diese Verfahrensschritte erlauben, eine Lage des ausgewerteten Graubilds anhand des Schwerpunkts zu erkennen und damit einen möglichen Versatz in dem linienförmigen Element zu erkennen.

Der Schwerpunkt der Helligkeitswerte kann abhängig vom Helligkeitswert des jeweiligen Bildwertes sowie dessen Positionswert in der jeweiligen Reihe sein. Insbesondere kann der Schwerpunkt der Helligkeitswerte aus der Summe der Helligkeitswerte aller in einer Reihe befindlichen Bildelemente multipliziert mit dem jeweiligen Positionswert des Bildelementes im Quotienten geteilt durch die Summe der Helligkeitswerte der jeweiligen Reihe im Dividend errechnet werden.

Gemäß einer beispielhaften Ausführungsform des Verfahrens erfolgt die gewichtete Superposition der drei Farbkanäle des 3-Kanal-Farbbilds basierend auf einem Helligkeitsempfinden des menschlichen Auges und gewichtet insbesondere einen Rotkanal des 3-Kanal-Farbbilds mit einem Gewicht von 0,299, einen Grünkanal des 3-Kanal-Farbbilds mit einem Gewicht von 0,587 und einen Blaukanal des 3-Kanal-Farbbilds mit einem Gewicht von 0,114.

Diese beispielhafte Superposition entspricht einer Gewichtung entsprechend dem Helligkeitsempfinden des menschlichen Auges und erzeugt damit ein sehr gut erkennbares, kontrastreiches Graubild.

Gemäß einer beispielhaften Ausführungsform des Verfahrens umfasst das linienförmige Element folgendes: eine Ambiente-Beleuchtung einer Interieur-Fahrzeugkomponente; eine Leuchtlinie in einer Fahrzeugkomponente; ein Leuchtelement oder eine Naht in einer Interieur-Fahrzeugkomponente; ein Kabel in einer Fahrzeugkomponente; eine Leiterbahn in einer Fahrzeugkomponente; oder ein Aufdruck in einer Fahrzeugkomponente.

Das hier vorgestellte Verfahren kann auf eine Vielzahl von linienförmigen Elementen angewandt werden, egal ob selbstleuchtend oder durch eine Umgebungslichtquelle beleuchtet.

Gemäß einer beispielhaften Ausführungsform des Verfahrens umfasst das Verfahren eine lagetolerante Erfassung des linienförmigen Elements basierend auf der ermittelten Dicke des linienförmigen Elements über die Mehrzahl der Reihen des Auswertebereichs.

Mit einer solchen lagetoleranten Erfassung ist die exakte Position des Auswertebereichs im Kamerabild nicht wesentlich. Das linienförmige Element kann an unterschiedlichen Stellen innerhalb des Auswertebereichs liegen, ohne dass eine Erfassungsgenauigkeit beeinträchtigt wird.

Gemäß einer beispielhaften Ausführungsform des Verfahrens ist der Auswertebereich in dem Kamerabild abhängig von einer Stellung einer Kamera zur Erfassung des Kamerabilds in Bezug auf die Fahrzeugkomponente und einer bekannten Position des linienförmigen Elements in der Fahrzeugkomponente vordefiniert.

Bei einer vordefinierten Position des Auswertebereichs entfällt der Schritt des Berechnens des Auswertebereichs innerhalb des Kamerabilds bzw. das Suchen nach einer optimalen Position innerhalb des Kamerabilds. Das Verfahren vereinfacht sich damit.

Gemäß einem zweiten Aspekt wird die oben beschriebene Aufgabe gelöst durch ein Computerprogramm, umfassend Befehle, die bei der Ausführung des Programms durch einen Computer diesen veranlassen, das Verfahren nach dem oben dargestellten ersten Aspekt auszuführen.

Damit lässt sich das oben beschriebene Verfahren effizient als Algorithmus ausführen, der auf einem Computersystem ablaufen kann.

Gemäß einem dritten Aspekt wird die oben beschriebene Aufgabe gelöst durch ein Prüfsystem zum Erkennen von Fehlstellen in linienförmigen Elementen von Fahrzeugkomponenten, wobei das Prüfsystem folgendes umfasst: zumindest eine Kamera, die ausgebildet ist, ein Kamerabild einer Fahrzeugkomponente mit einem linienförmigen Element bereitzustellen; wobei das Kamerabild Bildelemente mit einer jeweiligen Helligkeit umfasst; und ein Prüfcomputersystem, das ausgebildet ist: einen Auswertebereich in dem Kamerabild mit einer Mehrzahl von Reihen zu bestimmen, wobei der Auswertebereich zumindest einen Teil des linienförmigen Elements umfasst; Helligkeitswerte der Bildelemente einer jeweiligen Reihe des Auswertebereichs zu bestimmen; eine Anzahl von Bildelementen der jeweiligen Reihe des Auswertebereichs zu ermitteln, deren Helligkeitswerte jenseits eines Helligkeits-Schwellwertes liegen, wobei die ermittelte Anzahl einer Dicke des linienförmigen Elements in der jeweiligen Reihe des Auswertebereichs entspricht; und eine Fehlstelle in dem linienförmigen Element der Fahrzeugkomponente zu erkennen, falls die Dicke des linienförmigen Elements über die Mehrzahl der Reihen des Auswertebereichs eine Schwankung außerhalb eines Toleranzbereichs aufweist.

Ein solches Prüfsystem ermöglicht eine einfache und kostengünstige Auswertung von linienförmigen Elementen bzw. Bildelementen und kann bei der Prüfung von Fahrzeugkomponenten als Prüfsystem eingesetzt werden kann. Das Prüfsystem erlaubt es, linienförmige Bildelemente lagetolerant zu erfassen und effizient auf Fehlstellen zu überprüfen. Das Prüfsystem kann beispielsweise im Fertigungsprozess oder in der Endprüfung von Fahrzeugkomponenten eingesetzt werden, und als fehlerhaft erkannte Fahrzeugkomponenten auszusortieren.

Gemäß einer beispielhaften Ausführungsform des Prüfsystems umfasst das Prüfsystem eine Mehrzahl von Kameras, wobei jede Kamera auf einen Ausschnitt der Fahrzeugkomponente ausgerichtet ist und ausgebildet ist, einen entsprechenden Teil des linienförmigen Elements zu erfassen.

Damit können auch sehr lange linienförmige Bildelemente, wie zum Beispiel LED-Bänder, die entlang eines Teils der Fahrzeugkarosse oder des Fahrzeuginterieurs verlaufen, anhand der Mehrzahl von Kameras effizient in einem Schritt auf Fehler überprüft werden. Die Bilder der einzelnen Kameras können damit genauer erfasst werden als ein einziges großflächiges Bild einer einzelnen Kamera.

In dieser Offenbarung werden linienförmige Bildelemente (oder kurz: linienförmige Elemente) beschrieben. Diese Bildelemente haben einen gewissen Kontrast zum Hintergrund, so dass sie als separate Elemente auf dem Kamerabild erkennbar sind. Meist handelt es sich dabei um helle Bildelemente auf einem dunklen Hintergrund, beispielsweise Leuchten, zum Beispiel mit mehreren LEDs. Es kann sich aber auch um dunkle Elemente auf einem hellen Hintergrund handeln. Das linienförmige Bildelement, insbesondere seine Längsachse erstreckt sich dabei entlang einer Linie. Die Linie kann eine gerade Linie oder eine gewölbte bzw. gekrümmte Linie sein.

## Kurze Figurenbeschreibung

Im Folgenden wird die Erfindung anhand von Ausführungsbeispielen und den Figuren näher beschrieben. Es zeigen:

Fig. 1 eine schematische Darstellung eines erfindungsgemäßen Verfahrens 100 zum Erkennen von Fehlstellen in linienförmigen Elementen von Fahrzeugkomponenten;

Fig. 2a eine grafische Darstellung eines Kamerabilds 200 mit linienförmigem Element 203, das hier in Form eines teilmanipulierten Testbilds mit Auswertebereich 204 vorliegt, gemäß einem Ausführungsbeispiel;

Fig. 2b eine grafische Darstellung der drei Farbkanäle 211, 212, 213 des Kamerabilds 200 aus Figur 2a sowie eines daraus gewonnenen Graubildes 210 gemäß einem Ausführungsbeispiel;

Fig. 2c eine grafische Darstellung des Graubildes 210 aus Figur 2b mit Darstellung eines vertikalen Schnittes 205 an der Position 200 px gemäß einem Ausführungsbeispiel;

Fig. 3 eine grafische Darstellung der Grauwerte des vertikalen Schnitts 205 durch das Graubild 210 aus Figure 2c gemäß einem Ausführungsbeispiel;

Fig. 4 eine grafische Darstellung der ausgewerteten Liniendicke des linienförmigen Elements aus dem Graubild 210 der Figur 2c;

Fig. 5a eine grafische Darstellung der ausgewerteten Farbintensitäten des Kamerabilds 200 aus Figur 2a;

Fig. 5b eine grafische Darstellung der ausgewerteten Grauintensität des Graubilds 210 aus Figur 2c; und

Fig. 6 eine grafische Darstellung der ausgewerteten Schwerpunkte für das Graubild 210 aus Figur 2c.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

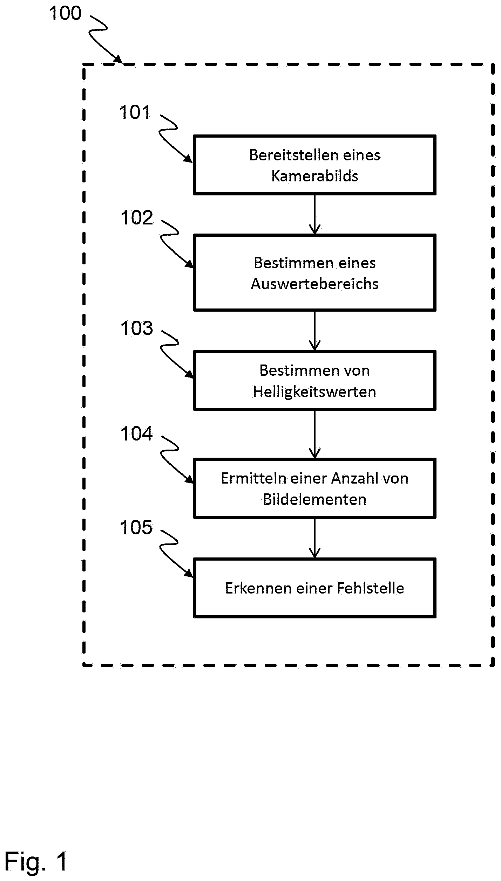

Fig. 1 zeigt eine schematische Darstellung eines erfindungsgemäßen Verfahrens 100 zum Erkennen von Fehlstellen in linienförmigen Elementen von Fahrzeugkomponenten.

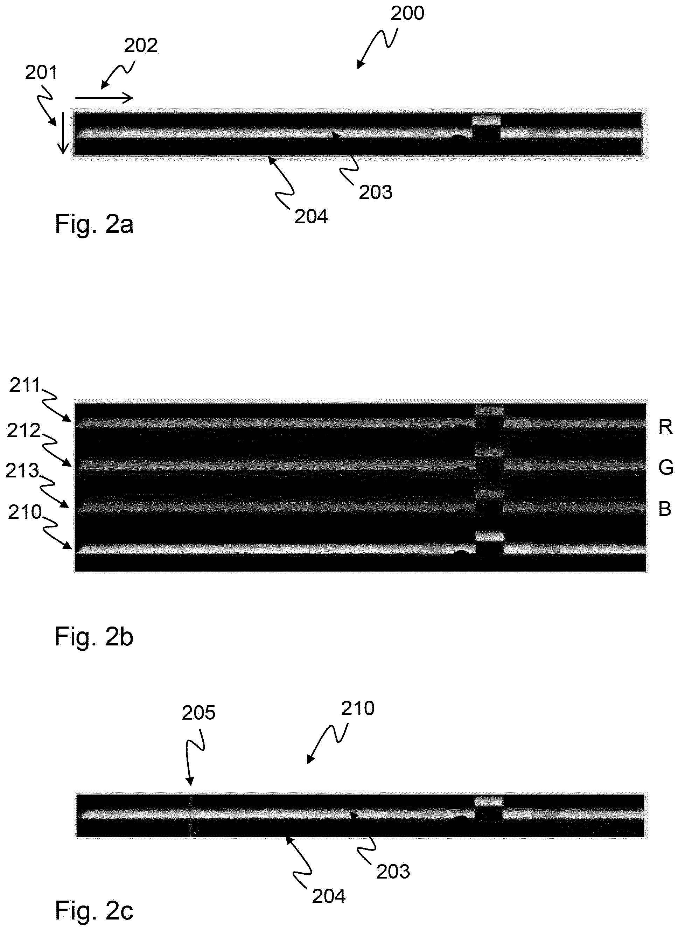

Das Verfahren 100 umfasst die folgenden Schritte:
Bereitstellen 101 eines Kamerabildes 200, beispielsweise entsprechend der Darstellung in Figur 2a, einer Fahrzeugkomponente mit einem linienförmigen Element 203; wobei das Kamerabild 200 Bildelemente mit einer jeweiligen Helligkeit umfasst;

Bestimmen 102 eines Auswertebereichs 204, wie beispielsweise in Figur 2a dargestellt, in dem Kamerabild 200 mit einer Mehrzahl 202 von Reihen 201, wobei der Auswertebereich 204 zumindest einen Teil des linienförmigen Elements 203 umfasst;

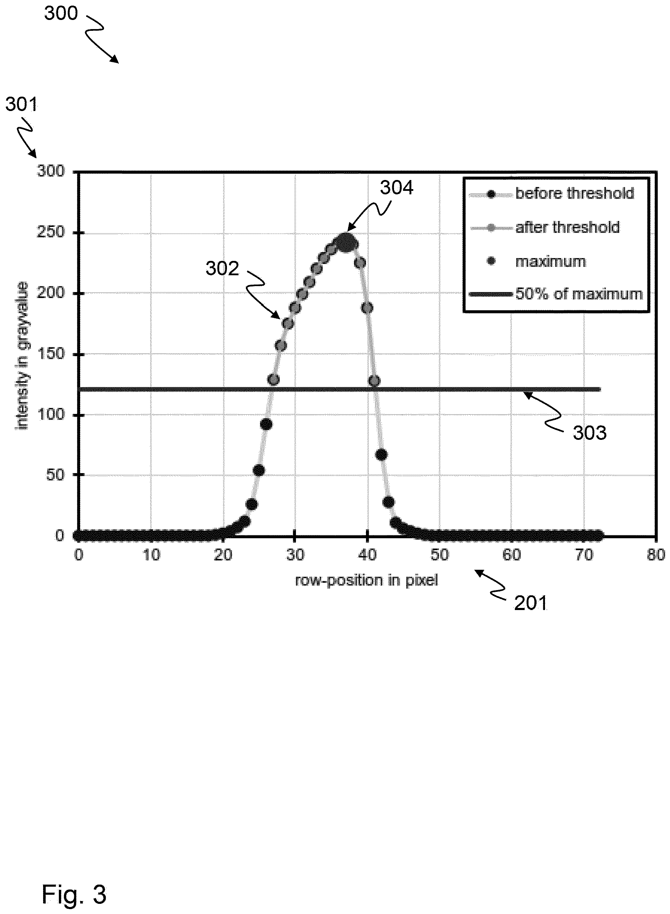

Bestimmen 103 von Helligkeitswerten 301 der Bildelemente einer jeweiligen Reihe 201 des Auswertebereichs 204, wie beispielsweise in Figur 3 dargestellt;

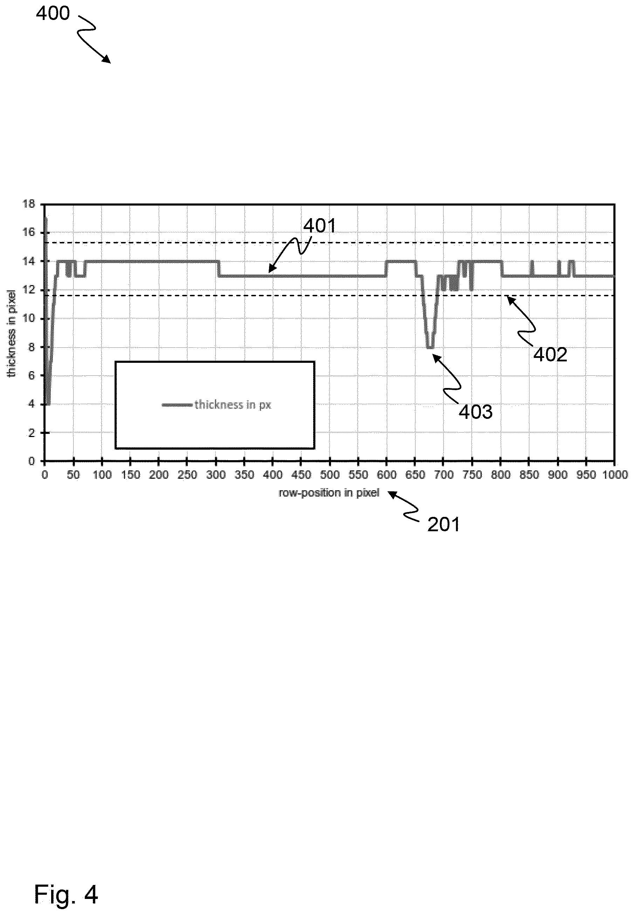

Ermitteln 104 einer Anzahl 302 von Bildelementen der jeweiligen Reihe 201 des Auswertebereichs 204, deren Helligkeitswerte 301 jenseits eines Helligkeits-Schwellwertes 303 liegen, wie beispielsweise in Figur 3 dargestellt, wobei die ermittelte Anzahl 302 einer Dicke 401 des linienförmigen Elements 203 in der jeweiligen Reihe 201 des Auswertebereichs 204 entspricht, wie beispielsweise in Figur 4 dargestellt; und

Erkennen 105 einer Fehlstelle 403 in dem linienförmigen Element 203 der Fahrzeugkomponente, wie beispielsweise in Figur 4 dargestellt, falls die Dicke 401 des linienförmigen Elements 203 über die Mehrzahl 202 der Reihen 201 des Auswertebereichs 204 eine Schwankung außerhalb eines Toleranzbereichs 402 aufweist.

Der Auswertebereich 204 kann beispielsweise ein rechteckiger Rahmen sein, wie in Figur 2a beispielhaft dargestellt, und so bestimmt sein, dass der zumindest eine Teil des linienförmigen Elements 203 entlang einer Längsrichtung des Rahmens in dem Rahmen angeordnet ist, wie in Figur 2a beispielhaft dargestellt.

Die Mehrzahl 202 von Reihen 201 können in etwa senkrecht zu dem linienförmigen Element 203 verlaufen und Schnitte durch eine Längsachse des linienförmigen Elements 203 repräsentieren, wie in Figur 2a beispielhaft dargestellt.

Das Kamerabild 200 kann beispielsweise ein Graubild 210 darstellen, dessen Bildelemente als Grautöne dargestellt sind, wobei die Grautöne den jeweiligen Helligkeiten der Bildelemente des Kamerabilds 200 entsprechen.

Das Kamerabild 200 kann beispielsweise ein 3-Kanal-Farbbild sein, wie in Figur 2b beispielhaft dargestellt, und das Verfahren 100 kann die folgenden Schritte umfassen: Zerlegen des 3-Kanal-Farbbilds in seine drei Farbkanäle 211, 212, 213, wie in Figur 2b beispielhaft dargestellt; und Erzeugen eines Graubilds 210 basierend auf einer gewichteten Superposition der drei Farbkanäle 211, 212, 213 des 3-Kanal-Farbbilds, wie in Figur 2b beispielhaft dargestellt; wobei das Bestimmen 103 der Helligkeitswerte 301 auf das Graubild 210 angewendet werden kann.

Das Verfahren 100 kann ferner die folgenden Schritte umfassen:
Bestimmen eines Mittelwerts der Helligkeitswerte 301 welche jenseits des Helligkeits-Schwellwertes 303 liegen, wobei der Mittelwert einer Grauintensität des linienförmigen Elements 203 in der jeweiligen Reihe 201 des Auswertebereichs 204 entspricht; und

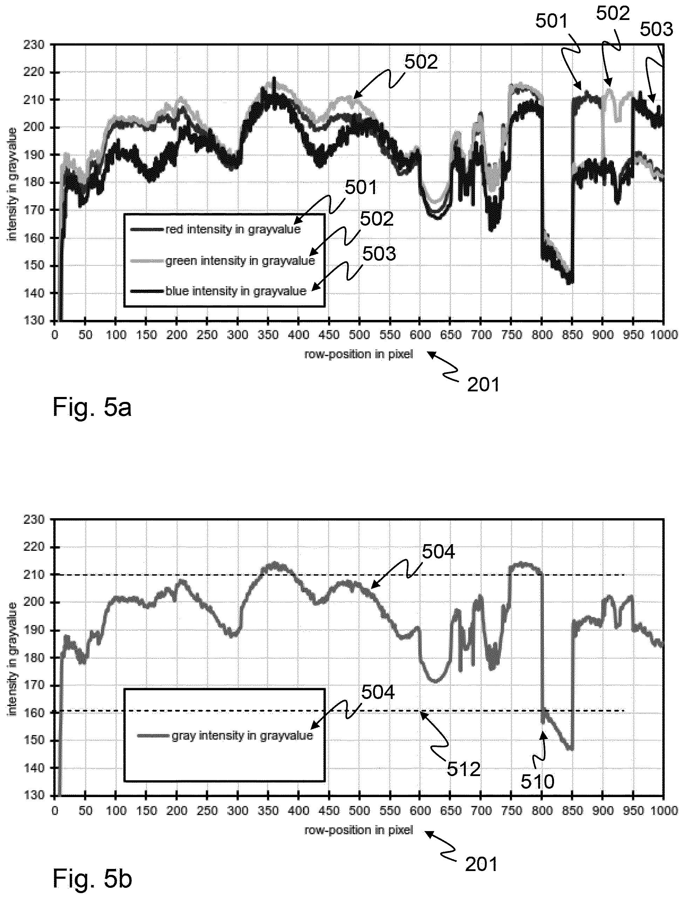

Erkennen einer Fehlstelle 510 in dem linienförmigen Element 203 der Fahrzeugkomponente, wie in Figur 5 beispielhaft dargestellt, falls die Grauintensität 504 über die Mehrzahl 202 der Reihen 201 des Auswertebereichs 204 eine Schwankung außerhalb eines jeweiligen Grauintensitäts-Toleranzbereichs 512 aufweist.

Das Bestimmen des Mittelwerts der Helligkeitswerte 301, welche jenseits des Helligkeits-Schwellwertes 303 liegen, kann zusätzlich auf die drei Farbkanäle 211, 212, 213, wie in Figur 2a und 5a beispielhaft dargestellt, angewendet werden, wobei der Mittelwert einer jeweiligen Farbintensität des linienförmigen Elements 203 in der jeweiligen Reihe 201 des Auswertebereichs 204.

Das Verfahren 100 kann ferner den folgenden Schritt umfassen:

Erkennen einer Fehlstelle 510 in dem linienförmigen Element 203 der Fahrzeugkomponente, wie in Figur 5 beispielhaft dargestellt, falls die jeweilige Farbintensität 501, 502, 503 über die Mehrzahl 202 der Reihen 201 des Auswertebereichs 204 eine Schwankung außerhalb eines jeweiligen Farbintensitäts-Toleranzbereichs aufweist.

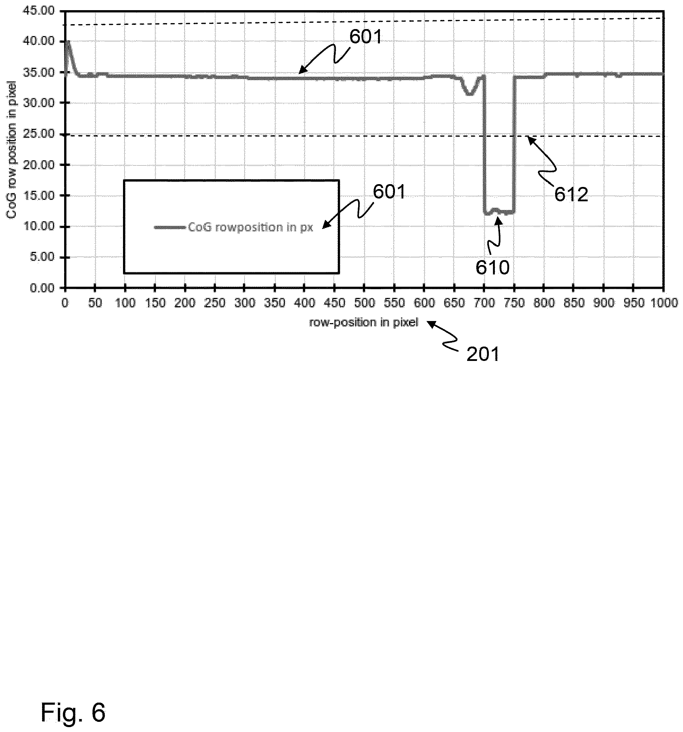

Das Verfahren 100 kann ferner die folgenden Schritte umfassen:
Bestimmen eines Schwerpunkts 601 der Helligkeitswerte 301 für die jeweilige Reihe 201 des Auswertebereichs 204, wie in Figur 6 beispielhaft dargestellt; und

Erkennen einer Fehlstelle 610 in dem linienförmigen Element 203 der Fahrzeugkomponente, falls der Schwerpunkt 601 über die Mehrzahl 202 der Reihen 201 des Auswertebereichs 204 eine Schwankung außerhalb eines Schwerpunkt-Toleranzbereichs 612 aufweist, wie in Figur 6 beispielhaft dargestellt.

Die gewichtete Superposition der drei Farbkanäle 211, 212, 213 des 3-Kanal-Farbbilds kann beispielsweise basierend auf einem Helligkeitsempfinden des menschlichen Auges erfolgen und beispielsweise einen Rotkanal des 3-Kanal-Farbbilds mit einem Gewicht von 0,299, einen Grünkanal des 3-Kanal-Farbbilds mit einem Gewicht von 0,587 und einen Blaukanal des 3-Kanal-Farbbilds mit einem Gewicht von 0,114 gewichten.

Das linienförmige Element 203 kann beispielsweise folgendes umfassen: eine Ambiente-Beleuchtung einer Interieur-Fahrzeugkomponente; eine Leuchtlinie in einer Fahrzeugkomponente; ein Leuchtelement oder eine Naht in einer Interieur-Fahrzeugkomponente; ein Kabel in einer Fahrzeugkomponente; eine Leiterbahn in einer Fahrzeugkomponente; oder ein Aufdruck in einer Fahrzeugkomponente.

Das Verfahren 100 kann ferner den folgenden Schritt umfassen: lagetolerante Erfassung des linienförmigen Elements 203 basierend auf der ermittelten Dicke 401 des linienförmigen Elements 203 über die Mehrzahl 202 der Reihen 201 des Auswertebereichs 204, wie in Figur 4 beispielhaft dargestellt.

Der Auswertebereich 204 kann in dem Kamerabild 200 abhängig von einer Stellung einer Kamera zur Erfassung des Kamerabilds 200 in Bezug auf die Fahrzeugkomponente und einer bekannten Position des linienförmigen Elements in der Fahrzeugkomponente vordefiniert sein.

Die Erfindung betrifft ferner ein Computerprogramm bzw. einen Algorithmus, umfassend Befehle, die bei der Ausführung des Programms durch einen Computer diesen veranlassen, das hier beschriebene Verfahren 100 auszuführen.

Die Erfindung betrifft ferner ein Prüfsystem zum Erkennen von Fehlstellen in linienförmigen Elementen von Fahrzeugkomponenten. Ein solches Prüfsystem umfasst folgendes:

Zumindest eine Kamera, die ausgebildet ist, ein Kamerabild 200 einer Fahrzeugkomponente mit einem linienförmigen Element 203 bereitzustellen, wie in den Figuren 2a, 2b, 2c beispielhaft dargestellt ist; wobei das Kamerabild 200 Bildelemente mit einer jeweiligen Helligkeit umfasst; und

ein Prüfcomputersystem, das ausgebildet ist:
einen Auswertebereich 204 in dem Kamerabild 200 mit einer Mehrzahl 202 von Reihen (201) zu bestimmen, wobei der Auswertebereich 204 zumindest einen Teil des linienförmigen Elements 203 umfasst, wie in den Figuren 2a, 2b, 2c beispielhaft dargestellt ist;

Helligkeitswerte 301 der Bildelemente einer jeweiligen Reihe 201 des Auswertebereichs 204 zu bestimmen, wie in Figur 3 beispielhaft dargestellt ist;

eine Anzahl 302 von Bildelementen der jeweiligen Reihe 201 des Auswertebereichs 204 zu ermitteln, deren Helligkeitswerte 301 jenseits eines Helligkeits-Schwellwertes 303 liegen, wie in den Figuren 3 und 4 beispielhaft dargestellt ist, wobei die ermittelte Anzahl 302 einer Dicke 401 des linienförmigen Elements 203 in der jeweiligen Reihe 201 des Auswertebereichs 204 entspricht; und

eine Fehlstelle 403 in dem linienförmigen Element 203 der Fahrzeugkomponente zu erkennen, falls die Dicke 401 des linienförmigen Elements 203 über die Mehrzahl 202 der Reihen 201 des Auswertebereichs 204 eine Schwankung außerhalb eines Toleranzbereichs 402 aufweist, wie in Figur 4 beispielhaft dargestellt ist.

Das Prüfsystem kann eine Mehrzahl von Kameras umfassen, wobei jede Kamera auf einen Ausschnitt der Fahrzeugkomponente ausgerichtet sein kann und ausgebildet sein kann, einen entsprechenden Teil des linienförmigen Elements 203 zu erfassen.

Fig. 2a zeigt eine grafische Darstellung eines Kamerabilds 200 mit linienförmigem Element 203, das hier in Form eines teilmanipulierten Testbilds mit Auswertebereich 204 vorliegt, gemäß einem Ausführungsbeispiel.

Der Auswertealgorithmus für linienförmige Bildelemente 203, wie oben zu Figur 1 beschrieben, kann universell auf alle Bilder angewendet werden. Die Vorgehensweise kann hier anhand eines Prüfkamerabildes 200 veranschaulicht werden. Das Bild 200 wurde im Bereich rechts wie folgt manuell verändert, um die unterschiedlichen Auswerteergebnisse darzustellen. Der Bereich links von Pixel 0 bis 600 ist unverändert.

Die folgenden Änderungen wurden manuell in das Kamerabild 200 eingefügt, um das oben beschriebene Verfahren 100 bzw. den Algorithmus zu beschreiben:

| Pixelposition | Änderung |
| --- | --- |
| 600-650 | Median-gefiltertes Bild (Unscharf-Filter) |
| 650-700 | kreisrunder Ausschnitt unten |
| 700-750 | um 22 px nach oben verschoben |
| 750-800 | Bild heller |

(fortgesetzt)

| Pixelposition | Änderung |
|---|---|
| 800-850 | Bild dunkler |
| 850-900 | Rotkanal angehoben |
| 900-950 | Grünkanal angehoben |
| 950-1000 | Blaukanal angehoben |

Der Algorithmus wurde für ein 3-Kanal-Farbbild (RGB) entwickelt, kann aber auch an reinen Graubildern angewendet werden. Dann entfällt der zusätzliche Schritt der Umwandlung des RGB-Bildes in ein Graubild.

Für die Umwandlung in ein Graubild wird das 3-Kanal-Farbbild in seine drei einzelnen Farbkanäle 211, 212, 213 zerlegt, wie in Figur 2b dargestellt.

Fig. 2b zeigt eine grafische Darstellung der drei Farbkanäle 211, 212, 213 des Kamerabilds 200 aus Figur 2a sowie eines daraus gewonnenen Graubildes 210 gemäß einem Ausführungsbeispiel.

Das Graubild 210 entsteht durch gewichtete Addition der drei Farbkanäle. Die die drei Farbbilder bzw. Farbkanäle 211, 212, 213 werden im folgenden Verhältnis miteinander addiert:

$$Grau = 0,299 \cdot Rot + 0,587 \cdot Grün + 0,114 \cdot Blau$$

Das so entstandene farbgewichtete Graubild 210 ähnelt dem Helligkeitsempfinden des menschlichen Auges. Daher werden die meisten Operationen an diesem Graubild 210 angewendet und dann auf die drei RGB-Farbkanäle 211, 212, 213 übertragen.

Um den auszuwertenden Bildbereich wird zunächst eine Auswerteregion (ROI) 204 im Bild definiert. Im Beispiel hier ist es das gesamte Bild. Es misst 72 Pixel Höhe und 1000 Pixel Breite. Es können aber auch Teilbereiche verwendet werden.

Innerhalb der Auswerteregion 204 wird das Graubild 210 horizontal von links nach rechts ausgewertet. Dazu wird je Pixel ein vertikaler Schnitt 205 angelegt, wie beispielhaft in Figur 2c dargestellt. Dieser Schnitt 205 hat hier im Beispiel die Länge 72 Pixel, da das Bild, wie die Auswerteregion 72 Pixel hoch ist. Veranschaulicht wird dies bei einem Schnitt 205 an der Horizontalposition 200 (siehe Schnittlinie in Figur 2c).

Fig. 2c zeigt eine grafische Darstellung des Graubildes 210 aus Figur 2b mit Darstellung des vertikalen Schnittes 205 an der Position 200 px gemäß einem Ausführungsbeispiel.

Die Helligkeitswerte (Grauwerte) dieses Schnitts 205 zeigen den in Figur 3 dargestellten Verlauf.

Fig. 3 zeigt eine grafische Darstellung der Grauwerte des vertikalen Schnitts 205 durch das Graubild 210 aus Figur 2c gemäß einem Ausführungsbeispiel.

Um einen eindeutigen Wert dieser Schnittkurve 205 zu bestimmen, wird zunächst das Maximum 304 der Kurve 301 bestimmt, um ähnlich wie bei anderen Kurvenparameterbestimmungen (zum Beispiel FWHM - Full Width Half Maximum, Gauß-Kurvendiskussion Standardabweichung, Laserspotgrößenbestimmung, etc.) die extrahierte Kurve 301 zu bewerten. Als weiteres Kriterium wird ein Schwellwert 303, hier auch als Helligkeits-Schwellwert bezeichnet, definiert.

Hier im Beispiel beträgt dieser 50% des Maximums. Es kann aber jeder beliebige Wert zwischen 0 und 100 % gewählt werden. Bei der Bestimmung der Spotgröße von monochromatischer Laserstrahlung wird z.B. $1/e^2 \approx 0,135$ verwendet.

Für die weitere Verrechnung werden alle Punkte 302, die mindestens diesen Schwellwert 303 besitzen, verwendet (hier in Figur 3 die Pixel 27 bis 41). Der Abstand des Anfangspixels (hier Pixel 27) zum Endpixel (hier Pixel 41) bildet die Breite der Linienform (hier als Dicke bzw. "thickness" bezeichnet).

Fig. 4 zeigt eine grafische Darstellung der ausgewerteten Liniendicke des linienförmigen Elements aus dem Graubild 210 der Figur 2c.

Der manipulierte, kreisrunde Ausschnitt im Bereich 650 bis 700 (siehe Figur 2a) wird hier als Fehlstelle 403 angezeigt, die außerhalb des Toleranzbereichs 402 liegt.

Die durch Schwellwert bzw. Toleranzbereich 402 gefundenen Pixel können ebenso nach ihren Grauwerten im Graubild und den drei Einzel-Farbbildern (Rot, Grün, Blau) ausgewertet weden. Dazu wird der Mittelwert der jeweiligen Grauwerte berechnet. Dies ergibt jeweils eine Intensitätsline je Bild (Rot-, Grün-, Blau- und Graubild), wie in Figur 5a für die drei Farbkanäle 211, 212, 213 und in Figur 5b für das Graubild 210 beispielhaft dargestellt.

Fig. 5a zeigt eine grafische Darstellung der ausgewerteten Farbintensitäten 501, 502, 503 des Kamerabilds 200 aus Figur 2a.

Ausgewertet wird der Rot-, Grün- und Blau-Kanal. Im Bereich 850 bis 1000 px ist die Farbmanipulation deutlich erkennbar, die durch eine Schwankung außerhalb eines jeweiligen Farbintensitäts-Toleranzbereichs erkannt werden kann.

Fig. 5b zeigt eine grafische Darstellung der ausgewerteten Grauintensität des Graubilds 210 aus Figur 2c.

Das ausgewertete Graubild 210 ist hier dargestellt als eine Helligkeitslinie mit Helligkeitsintensitäten bzw. Grauintensitäten 504. Im Bereich 750 bis 850 px ist die Helligkeitsmanipulation 510 deutlich erkennbar, die durch eine Schwankung außerhalb eines Grauintensitäts-Toleranzbereichs 512 erkannt werden kann.

Ebenso kann der Schwerpunkt 601 (Center of Gravity , CoG) der Pixel im Graubild 210 wie folgt berechnet werden, wie in Figur 6 beispielhaft dargestellt:

$$CoG = \frac{\sum(\text{Grauwert}_i \cdot \text{Zeile}_i)}{\sum(\text{Grauwert}_i)}$$

Fig. 6 zeigt hier eine grafische Darstellung der ausgewerteten Schwerpunkte für das Graubild 210 aus Figur 2c.

Somit kann zusätzlich zur Liniendicke eine Aussage über die Lage des zu untersuchenden linienförmigen Elements 203 gemacht werden. Hier ist zu beachten, dass bei Bildbearbeitung die Zeilen (bzw. Reihen oder "rows"), statt wie gewöhnlich in einem rechtsdrehenden Koordinatensystem von unten nach oben, von oben nach unten gezählt werden. Das erklärt den Abfall 610 der Schwerpunktslinie 601 im Bereich von Pixel 700 bis 750.

Gut zu erkennen ist in Figur 6 der Versatz der Linie 601 im Bereich 700 bis 750 und der Ausschnitt im Bereich von 650 bis 700 Pixel.

Dieser Versatz kann als eine Fehlstelle 610 im linienförmigen Element 203 durch eine Schwankung der Linie 601 außerhalb eines Schwerpunkt-Toleranzbereichs 612 erkannt werden kann.

BEZUGSZEICHENLISTE

100     Verfahren zum Erkennen von Fehlstellen in linienförmigen Elementen
101     Bereitstellen eines Kamerabildes
102     Bestimmen eines Auswertebereichs
103     Bestimmen von Helligkeitswerten
104     Ermitteln einer Anzahl von Bildelementen
105     Erkennen einer Fehlstelle

200     Kamerabild
201     Reihen des Kamerabilds
202     Mehrzahl der Reihen
203     linienförmiges Element
204     Auswertebereich
205     vertikaler Schnitt durch den Auswertebereich
210     Graubild
211     erster Farbkanal bzw. Rot-Kanal des 3-Kanal-Farbbilds
212     zweiter Farbkanal bzw. Grün-Kanal des 3-Kanal-Farbbilds
213     dritter Farbkanal bzw. Blau-Kanal des 3-Kanal-Farbbilds

300     Diagramm des Verlaufs der Helligkeitswerte bzw. Grauwerte
301     Helligkeitswerte bzw. Grauwerte
302     ermittelte Anzahl der Helligkeitswerte jenseits des Helligkeits-Schwellwerts
303     Helligkeits-Schwellwert
304     Maximum der Kurve 301

400     Diagramm des Verlaufs der Liniendicke
401     Dicke des linienförmigen Elements
402     Toleranzbereichs für die Dicke des linienförmigen Elements
403     Fehlstelle in dem linienförmigen Element

501     Farbintensität des Rot-Kanals
502     Farbintensität des Grün-Kanals
503     Farbintensität des Blau-Kanals

504     Grauintensität
510     Fehlstelle in dem linienförmigen Element
512     Grauintensitäts-Toleranzbereich

601     Schwerpunkt der Helligkeitswerte
610     Fehlstelle in dem linienförmigen Element
612     Schwerpunkt-Toleranzbereich

**Patentansprüche**

1.  Verfahren (100) zum Erkennen von Fehlstellen in linienförmigen Elementen von Fahrzeugkomponenten, wobei das Verfahren (100) folgende Schritte umfasst:

    Bereitstellen (101) eines Kamerabildes (200) einer Fahrzeugkomponente mit einem linienförmigen Element (203); wobei das Kamerabild (200) Bildelemente mit einer jeweiligen Helligkeit umfasst;
    Bestimmen (102) eines Auswertebereichs (204) in dem Kamerabild (200) mit einer Mehrzahl (202) von Reihen (201), wobei der Auswertebereich (204) zumindest einen Teil des linienförmigen Elements (203) umfasst;
    Bestimmen (103) von Helligkeitswerten (301) der Bildelemente einer jeweiligen Reihe (201) des Auswertebereichs (204);
    Ermitteln (104) einer Anzahl (302) von Bildelementen der jeweiligen Reihe (201) des Auswertebereichs (204), deren Helligkeitswerte (301) jenseits eines Helligkeits-Schwellwertes (303) liegen, wobei die ermittelte Anzahl (302) einer Dicke (401) des linienförmigen Elements (203) in der jeweiligen Reihe (201) des Auswertebereichs (204) entspricht; und
    Erkennen (105) einer Fehlstelle (403) in dem linienförmigen Element (203) der Fahrzeugkomponente, falls die Dicke (401) des linienförmigen Elements (203) über die Mehrzahl (202) der Reihen (201) des Auswertebereichs (204) eine Schwankung außerhalb eines Toleranzbereichs (402) aufweist.

2.  Verfahren (100) nach Anspruch 1,
    wobei der Auswertebereich (204) ein rechteckiger Rahmen ist und so bestimmt ist, dass der zumindest eine Teil des linienförmigen Elements (203) entlang einer Längsrichtung des Rahmens in dem Rahmen angeordnet ist.

3.  Verfahren (100) nach Anspruch 2,
    wobei die Mehrzahl (202) von Reihen (201) in etwa senkrecht zu dem linienförmigen Element (203) verläuft und insbesondere Schnitte durch eine Längsachse des linienförmigen Elements (203) repräsentiert.

4.  Verfahren (100) nach einem der vorstehenden Ansprüche,
    wobei das Kamerabild (200) ein Graubild (210) darstellt, dessen Bildelemente als Grautöne dargestellt sind, wobei die Grautöne den jeweiligen Helligkeiten der Bildelemente des Kamerabilds (200) entsprechen.

5.  Verfahren (100) nach einem der vorstehenden Ansprüche,
    wobei das Kamerabild (200) ein 3-Kanal-Farbbild ist und das Verfahren (100) die folgenden Schritte umfasst:

    Zerlegen des 3-Kanal-Farbbilds in seine drei Farbkanäle (211, 212, 213); und
    Erzeugen eines Graubilds (210) basierend auf einer gewichteten Superposition der drei Farbkanäle (211, 212, 213) des 3-Kanal-Farbbilds;
    wobei das Bestimmen (103) der Helligkeitswerte (301) auf das Graubild (210) angewendet wird.

6.  Verfahren (100) nach Anspruch 5, mit folgenden Schritten:

    Bestimmen eines Mittelwerts der Helligkeitswerte (301) welche jenseits des Helligkeits-Schwellwertes (303) liegen, wobei der Mittelwert einer Grauintensität des linienförmigen Elements (203) in der jeweiligen Reihe (201) des Auswertebereichs (204) entspricht; und
    Erkennen einer Fehlstelle (510) in dem linienförmigen Element (203) der Fahrzeugkomponente, falls die Grauintensität (504) über die Mehrzahl (202) der Reihen (201) des Auswertebereichs (204) eine Schwankung außerhalb eines jeweiligen Grauintensitäts-Toleranzbereichs (512) aufweist.

7.  Verfahren (100) nach Anspruch 6,
    wobei das Bestimmen des Mittelwerts der Helligkeitswerte (301), welche jenseits des Helligkeits-Schwellwertes (303) liegen, zusätzlich auf die drei Farbkanäle (211, 212, 213) angewendet wird, wobei der Mittelwert einer jeweiligen Farbintensität des linienförmigen Elements (203) in der jeweiligen Reihe (201) des Auswertebereichs (204) entspricht; und wobei das Verfahren ferner folgenden Schritt aufweist:

Erkennen einer Fehlstelle (510) in dem linienförmigen Element (203) der Fahrzeugkomponente, falls die jeweilige Farbintensität (501, 502, 503) über die Mehrzahl (202) der Reihen (201) des Auswertebereichs (204) eine Schwankung außerhalb eines jeweiligen Farbintensitäts-Toleranzbereichs aufweist.

8. Verfahren (100) nach einem der Ansprüche 5 bis 7, mit folgenden Schritten:

Bestimmen eines Schwerpunkts (601) der Helligkeitswerte (301) für die jeweilige Reihe (201) des Auswertebereichs (204); und

Erkennen einer Fehlstelle (610) in dem linienförmigen Element (203) der Fahrzeugkomponente, falls der Schwerpunkt (601) über die Mehrzahl (202) der Reihen (201) des Auswertebereichs (204) eine Schwankung außerhalb eines Schwerpunkt-Toleranzbereichs (612) aufweist.

9. Verfahren (100) nach einem der Ansprüche 5 bis 8,
wobei die gewichtete Superposition der drei Farbkanäle (211, 212, 213) des 3-Kanal-Farbbilds basierend auf einem Helligkeitsempfinden des menschlichen Auges erfolgt und insbesondere einen Rotkanal des 3-Kanal-Farbbilds mit einem Gewicht von 0,299, einen Grünkanal des 3-Kanal-Farbbilds mit einem Gewicht von 0,587 und einen Blaukanal des 3-Kanal-Farbbilds mit einem Gewicht von 0,114 gewichtet.

10. Verfahren (100) nach einem der vorstehenden Ansprüche,
wobei das linienförmige Element folgendes umfasst:

eine Ambiente-Beleuchtung einer Interieur-Fahrzeugkomponente;
eine Leuchtlinie in einer Fahrzeugkomponente;
ein Leuchtelement oder eine Naht in einer Interieur-Fahrzeugkomponente;
ein Kabel in einer Fahrzeugkomponente;
eine Leiterbahn in einer Fahrzeugkomponente; oder
ein Aufdruck in einer Fahrzeugkomponente.

11. Verfahren (100) nach einem der vorstehenden Ansprüche, umfassend:
lagetolerante Erfassung des linienförmigen Elements (203) basierend auf der ermittelten Dicke (401) des linienförmigen Elements (203) über die Mehrzahl (202) der Reihen (201) des Auswertebereichs (204).

12. Verfahren (100) nach einem der vorstehenden Ansprüche,
wobei der Auswertebereich (204) in dem Kamerabild (200) abhängig von einer Stellung einer Kamera zur Erfassung des Kamerabilds (200) in Bezug auf die Fahrzeugkomponente und einer bekannten Position des linienförmigen Elements in der Fahrzeugkomponente vordefiniert ist.

13. Computerprogramm, umfassend Befehle, die bei der Ausführung des Programms durch einen Computer diesen veranlassen, das Verfahren nach einem der vorstehenden Ansprüche auszuführen.

14. Prüfsystem zum Erkennen von Fehlstellen in linienförmigen Elementen von Fahrzeugkomponenten, wobei das Prüfsystem folgendes umfasst:

zumindest eine Kamera, die ausgebildet ist, ein Kamerabild (200) einer Fahrzeugkomponente mit einem linienförmigen Element (203) bereitzustellen; wobei das Kamerabild (200) Bildelemente mit einer jeweiligen Helligkeit umfasst; und
ein Prüfcomputersystem, das ausgebildet ist:

einen Auswertebereich (204) in dem Kamerabild (200) mit einer Mehrzahl (202) von Reihen (201) zu bestimmen, wobei der Auswertebereich (204) zumindest einen Teil des linienförmigen Elements (203) umfasst;
Helligkeitswerte (301) der Bildelemente einer jeweiligen Reihe (201) des Auswertebereichs (204) zu bestimmen;
eine Anzahl (302) von Bildelementen der jeweiligen Reihe (201) des Auswertebereichs (204) zu ermitteln, deren Helligkeitswerte (301) jenseits eines Helligkeits-Schwellwertes (303) liegen, wobei die ermittelte Anzahl (302) einer Dicke (401) des linienförmigen Elements (203) in der jeweiligen Reihe (201) des Auswertebereichs (204) entspricht; und

eine Fehlstelle (403) in dem linienförmigen Element (203) der Fahrzeugkomponente zu erkennen, falls die Dicke (401) des linienförmigen Elements (203) über die Mehrzahl (202) der Reihen (201) des Auswertebereichs (204) eine Schwankung außerhalb eines Toleranzbereichs (402) aufweist.

15. Prüfsystem nach Anspruch 14, umfassend:

eine Mehrzahl von Kameras, wobei jede Kamera auf einen Ausschnitt der Fahrzeugkomponente ausgerichtet ist und ausgebildet ist, einen entsprechenden Teil des linienförmigen Elements (203) zu erfassen.

100

101 Bereitstellen eines Kamerabilds

102 Bestimmen eines Auswertebereichs

103 Bestimmen von Helligkeitswerten

104 Ermitteln einer Anzahl von Bildelementen

105 Erkennen einer Fehlstelle

Fig. 1

Fig. 2a

Fig. 2b

Fig. 2c

Fig. 3

Fig. 4

Fig. 5a

Fig. 5b

Fig. 6

# EUROPÄISCHER RECHERCHENBERICHT

Nummer der Anmeldung

EP 24 15 7496

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JP H02 31138 A (NISSAN MOTOR) 1. Februar 1990 (1990-02-01) * abstract, Figs. 1-9, pages 1-4 * ----- | 1-15 | INV. G06T7/00 G06T7/60 |
| A | JP S63 133005 A (CANON KK) 4. Juni 1988 (1988-06-04) * abstract, Figs. 1-5, pages 1-4 * ----- | 1-15 | |
| A | JP 4 232940 B2 (RICOH KK) 4. März 2009 (2009-03-04) * abstract, Figs. 1-9, [0001-0030] * ----- | 1-15 | |
| A | CN 116 761 301 A (GEELY HOLDING GROUP CO LTD ET AL.) 15. September 2023 (2023-09-15) * abstract, Figs. 1-6, [0001-0132] * ----- | 1-15 | |

**RECHERCHIERTE SACHGEBIETE (IPC)**

G06T

Der vorliegende Recherchenbericht wurde für alle Patentansprüche erstellt

| Recherchenort | Abschlußdatum der Recherche | Prüfer |
|---|---|---|
| München | 25. Juli 2024 | Borotschnig, Hermann |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 15 7496

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-07-2024

| Im Recherchenbericht angeführtes Patentdokument | Datum der Veröffentlichung | Mitglied(er) der Patentfamilie | Datum der Veröffentlichung |
|---|---|---|---|
| JP H0231138 A | 01-02-1990 | KEINE | |
| JP S63133005 A | 04-06-1988 | JP H06100446 B2 | 12-12-1994 |
| | | JP S63133005 A | 04-06-1988 |
| JP 4232940 B2 | 04-03-2009 | JP 4232940 B2 | 04-03-2009 |
| | | JP 2002279406 A | 27-09-2002 |
| CN 116761301 A | 15-09-2023 | KEINE | |

EPO FORM P0461

Für nähere Einzelheiten zu diesem Anhang : siehe Amtsblatt des Europäischen Patentamts, Nr.12/82